# FASCICULE DE BREVET EUROPEEN

(11) **EP 3 963 197 B1**
(45) Date de publication et mention de la délivrance du brevet: **26.07.2023**
(21) Numéro de dépôt: 20715880.9
(22) Date de dépôt: 03.04.2020
(51) Int. Cl.: F02K 1/72, F02K 1/82

(54) **GRILLE D'INVERSEUR DE POUSSEE INCLUANT UN TRAITEMENT ACOUSTIQUE**
SCHUBUMKEHRKASKADE MIT AKUSTISCHER BEHANDLUNG
THRUST REVERSER CASCADE INCLUDING AN ACOUSTIC TREATMENT

(30) Priorité: 03.05.2019 FR 1904653
(43) Date de publication de la demande: 09.03.2022
(73) Titulaire: SAFRAN AIRCRAFT ENGINES, 75015 Paris (FR)
(72) Inventeur: JODET, Norman, Bruno, André, 77550 MOISSY-CRAMAYEL (FR); GONZALEZ, Jéremy, Paul, Francisco, 77550 MOISSY-CRAMAYEL (FR)
(74) Mandataire: Cabinet Beau de Loménie
(86) Numéro de dépôt international: PCT/EP2020/059552
(87) Numéro de publication internationale: WO 2020/224886

(56) Documents cités:
- EP-A1- 3 406 887
- EP-A2- 1 852 595
- WO-A1-2019/002753
- US-A1- 2015 285 184
- US-A1- 2016 263 820

## Description

### Domaine Technique

L'invention concerne le traitement acoustique des ondes sonores émises par une turbomachine d'un aéronef, et plus particulièrement le traitement des ondes sonores au niveau des inverseurs de poussée de la turbomachine.

### Technique antérieure

Lorsqu'une turbomachine est en fonctionnement, l'interaction entre l'écoulement et les parties solides de la turbomachine sont responsables de la génération de bruits qui se propagent de part et d'autre de la turbomachine.

Un des moyens d'atténuer ce rayonnement acoustique est d'intégrer des moyens de traitement acoustique au niveau des surfaces en contacts avec les ondes sonores.

Classiquement, le traitement acoustique d'un turboréacteur, et plus précisément du bruit rayonné par l'interaction entre le rotor et son environnement, est fait à l'aide de panneaux absorbants disposés au niveau des surfaces mouillées du conduit dans lequel se propagent les ondes sonores. On entend par surfaces mouillées, les surfaces en contact avec un écoulement fluide. Ces panneaux sont généralement des matériaux composites de type sandwich emprisonnant un nid d'abeille formant des cellules d'absorption acoustique.

Il est connu par exemple dans l'état de la technique des panneaux acoustiques à un seul degré de liberté, ou SDOF pour « Single degree of freedom » en anglais, qui présentent une structure classique en nid d'abeilles de panneaux de traitement acoustique garnissant les parois de la nacelle d'une turbomachine.

De par le principe de fonctionnement des technologies de panneau de traitement acoustique utilisant des cavités résonnantes, l'encombrement radial, c'est-à-dire l'épaisseur radiale, des panneaux de traitement acoustique dépend de la fréquence de traitement ciblée pour obtenir un maximum d'efficacité en termes d'atténuation acoustique.

Cependant, les architectures moteurs présentent de plus en plus des vitesses de rotation des roues à aubes de plus en plus lentes et un nombre d'aubes sur les roues à aubes de plus en plus petit, ce qui entraîne une baisse des fréquences dominantes du bruit associé au module comprenant la soufflante et l'étage redresseur, ou module « fan-OGV » en anglais pour « Outlet Guide Vane ». De ce fait, l'adéquation entre l'épaisseur optimale des panneaux acoustiques et l'encombrement disponible dans les nacelles n'est, actuellement, pas satisfaite.

Pour ralentir un aéronef, une turbomachine comprend généralement des inverseur de poussée. Il existe principalement deux technologies d'inverseurs de poussée qui sont basées sur l'action d'une grille. On distingue deux types d'inverseurs de poussée à grille : les inverseurs de poussée à grille fixe et les inverseurs de poussée à grille en liaison glissière.

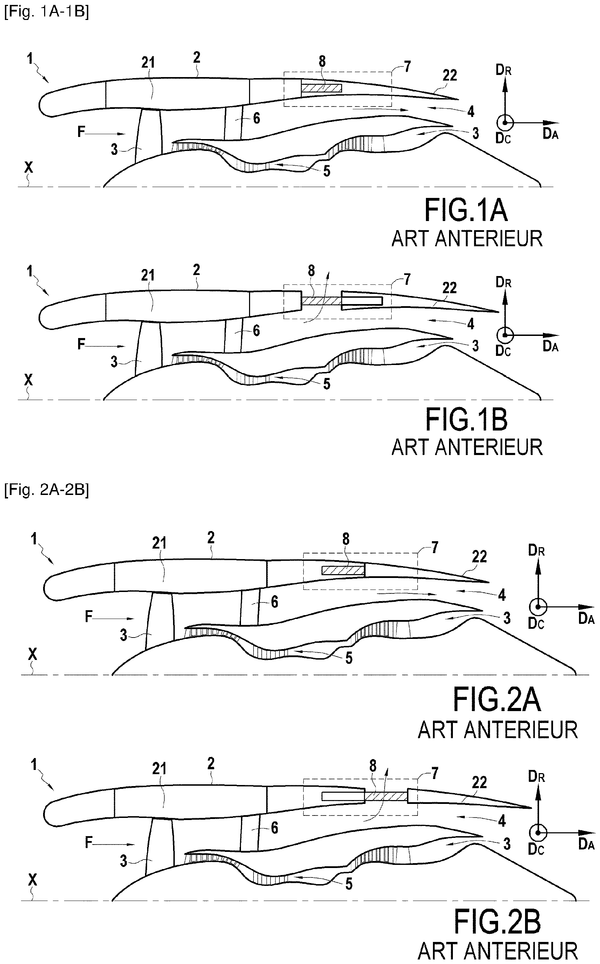

Sur les figures 1a et 1b sont présentées des vues schématiques en section dans un plan longitudinal d'une turbomachine 1 selon un premier mode de réalisation connu de l'état de la technique respectivement dans une position d'inversion de poussée inactivée et dans une position d'inversion de poussée activée.

La turbomachine 1 comprend une nacelle 2 à symétrie de révolution autour d'un axe X définissant une direction axiale D_{A}, une direction radiale D_{R} et une direction circonférentielle D_{C}, une soufflante 3, une veine primaire 4, une veine secondaire, un étage redresseur primaire 5, un étage redresseur secondaire 6, et un dispositif 7 d'inversion de poussée à grille comportant une grille 8.

Comme cela est illustrée sur les figures 1A et 1B qui représentent une turbomachine dotée d'un inverseur de poussée à grille fixe, dans les inverseurs de poussée à grille fixe, la grille 8 est encastrée, c'est-à-dire solidaire, avec une partie amont 21 de la nacelle 2 et en liaison glissière avec une partie aval 22 de la nacelle 2, l'amont et l'aval étant définis par rapport au sens d'écoulement d'un flux gazeux F dans la turbomachine 1. En se translatant vers l'aval, la partie aval 22 de la nacelle 2 découvre la grille 8 qui devient la seule interface entre l'écoulement interne à la nacelle 2 et le milieu ambiant dans lequel évolue la turbomachine 1.

Sur les figures 2a et 2b sont présentées des vues schématiques en section dans un plan longitudinal d'une turbomachine 1 selon un second mode de réalisation connu de l'état de la technique respectivement dans une position d'inversion de poussée inactive et dans une position d'inversion de poussée activée.

Comme cela est illustrée sur les figures 2A et 2B qui représentent une turbomachine 1 dotée d'un inverseur de poussée à grille en liaison glissière, dans les inverseurs de poussée à grille fixe, la grille 8 est en liaison glissière par rapport à la partie amont 21 de la nacelle 2 et en liaison d'encastrement par rapport à la partie aval 22 de la nacelle 2. En se translatant vers l'aval, la partie aval 22 de la nacelle 2 entraine la grille 8 hors de la nacelle 2 pour la positionner à l'interface entre l'écoulement interne à la nacelle 2 et le milieu ambiant.

Les inverseurs de poussée représentent à la fois, un coût, une masse et un encombrement très pénalisants pour les performances de l'ensemble propulsif, alors qu'ils sont utilisés seulement à la fin de la phase d'atterrissage. Le volume qu'ils utilisent dans la nacelle ne peut notamment pas être utilisé, dans l'état de l'art, pour le traitement acoustique des ondes sonores émises par la turbomachine.

Dans les architectures d'ensemble propulsif utilisant des inverseurs de poussée à portes qui se déploient à l'intérieur du flux secondaire pour dévier l'écoulement vers l'amont à l'extérieur de la nacelle, une pratique connue d'intégration de traitement acoustique classique consiste à intégrer des panneaux acoustiques dans des cavités des portes d'inverseur. Cette pratique consiste simplement à intégrer des panneaux absorbants classiques dans les volumes disponibles, comme cela est fait dans le carter fan.

Le document EP 3 406 887 A1 divulgue une turbomachine destinée à être montée sur un aéronef selon l'art antérieur.

### Exposé de l'invention

L'invention vise à fournir une grille d'un inverseur de poussée à grille qui permette, lorsque la grille est montée dans un inverseur de poussée d'une turbomachine, à la fois de réorienter un flux d'air vers l'amont de la turbomachine à l'extérieur de la nacelle, de minimiser les pertes de charge à travers la grille et de maximiser l'efficacité d'absorption acoustique.

Un objet de l'invention propose une grille pour un dispositif d'inversion de poussée destiné à être monté sur une turbomachine d'un aéronef, la grille comportant des premières cloisons s'étendant dans une première direction, des secondes cloisons s'étendant dans une deuxième direction orthogonale à la première direction, les secondes cloisons s'étendant entre une première et une seconde extrémités dans une troisième direction orthogonale aux première et deuxième directions, et au moins une partie de chaque seconde cloison s'étendant entre deux premières cloisons dans un plan comprenant les première et deuxième directions.

Selon une caractéristique générale de l'invention, chaque seconde cloison forme, avec des plans de référence parallèles à la deuxième direction et à la troisième direction, une pluralité d'angles différents à des positions distinctes de la hauteur des secondes cloisons séparant la première extrémité de la seconde extrémité des secondes cloisons, chaque angle étant formé entre un plan de référence et la tangente à la seconde cloison prise à l'intersection entre ledit plan de référence correspondant et la seconde cloison, à la position de la hauteur de la seconde cloison correspondante.

Les secondes cloisons sont destinées à être orientées selon une direction orthogonale à la direction d'écoulement d'un flux gazeux à l'intérieur d'une turbomachine comportant un dispositif d'inversion de poussée doté d'une telle grille. Lorsque la grille est montée sur un dispositif d'inversion de poussée sur une turbomachine, les secondes cloisons, orientées selon une direction azimutale ou radiale de la turbomachine, sont indispensables pour garantir la fonctionnalité d'inversion de poussée. C'est en effet grâce à ces secondes cloisons que le flux d'air circulant dans une veine, à l'intérieur de la nacelle dans laquelle le dispositif d'inversion de poussée est monté, peut être capté et réorienté vers l'amont de la turbomachine, par rapport au sens d'écoulement du flux à l'intérieur de la nacelle, à l'extérieur de la nacelle.

Les premières cloisons sont destinées à être orientées selon la direction du flux gazeux à l'intérieur d'une turbomachine comportant un dispositif d'inversion de poussée doté d'une telle grille. Lorsque la grille est montée sur un dispositif d'inversion de poussée sur une turbomachine, les premières cloisons, orientées selon une direction axiale de la turbomachine, ne sont pas indispensables pour la fonctionnalité d'inversion de poussée. En revanche, elles permettent d'obtenir des cavités permettant d'atténuer des ondes acoustiques générées par la turbomachine.

La conformation des secondes cloisons permet à la fois de favoriser la propagation acoustique en ondes planes à l'entrée dans les cavités résonantes, en évitant les phénomènes de réflexion d'ondes sur les cloisons d'inverseur, et de bien capter l'écoulement aérodynamique lorsque l'inverseur de poussée est activé pour le réorienter vers l'amont et l'extérieur de la nacelle lorsque la grille est montée sur une turbomachine.

Dans un premier aspect de la grille, la distance entre deux premières cloisons selon la deuxième direction peut correspondre à la distance entre deux secondes cloisons selon la première direction.

Un tel agencement permet d'obtenir des mailles sensiblement carrées et ainsi de favoriser la propagation acoustique en ondes planes à l'intérieur des cavités.

Dans un deuxième aspect de la grille, les secondes cloisons peuvent comprendre un premier angle compris entre 0° et 40° et formé à une première position de ladite hauteur des secondes cloisons, la première position étant comprise entre 0% et 20% de ladite hauteur mesurée depuis la première extrémité vers la seconde extrémité.

Ce premier angle est destiné à orienter une première portion de seconde cloison vers l'aval lorsque la grille est montée dans un dispositif d'inversion de poussée disposé dans une turbomachine traversée par un flux d'air depuis l'amont de l'a turbomachine vers l'aval de la turbomachine.

Ce premier angle est formé à l'entrée de la cavité résonante, c'est-à-dire à une position de la hauteur de la seconde cloison la plus proche de l'écoulement de flux gazeux à l'intérieur de la nacelle lorsque la grille est montée sur une turbomachine. Ce premier angle permet de favoriser la propagation acoustique en ondes planes à l'entrée dans les cavités résonantes, en évitant les phénomènes de réflexions d'ondes sur les cloisons d'inverseur

Dans un troisième aspect de la grille, les secondes cloisons peuvent comprendre un deuxième angle compris entre 20° et 60° et formé entre la première position et la seconde extrémité à une deuxième position de ladite hauteur des secondes cloisons comprise entre 5% et 60% de ladite hauteur mesurée depuis la première extrémité.

Ce deuxième angle est destiné à orienter une deuxième portion de seconde cloison vers l'aval lorsque la grille est montée dans un dispositif d'inversion de poussée disposé dans une turbomachine traversée par un flux d'air.

Ce deuxième angle formé à une deuxième position de la hauteur de la seconde cloison plus éloignée du flux gazeux circulant à l'intérieur de la nacelle que le premier angle, permet de bien capter l'écoulement aérodynamique lorsque l'inverseur de poussée est activé.

Dans un quatrième aspect de la grille, les secondes cloisons peuvent comprendre un troisième angle compris entre -20° et -70° et formé entre la deuxième position et la deuxième extrémité à une troisième position de ladite hauteur des secondes cloisons comprise entre 45% et 95% de ladite hauteur mesurée depuis la première extrémité.

Ce troisième angle est destiné à orienter une troisième portion de seconde cloison vers l'aval lorsque la grille est montée dans un dispositif d'inversion de poussée disposé dans une turbomachine traversée par un flux d'air.

Ce troisième angle formé à une troisième position de la hauteur de la seconde cloison plus éloignée du flux gazeux circulant à l'intérieur de la nacelle que le deuxième angle, permet de réorienter l'écoulement aérodynamique vers l'amont de la turbomachine à l'extérieur de la nacelle, lorsque l'inverseur de poussée est en position ouverte.

Dans un cinquième aspect de la grille, les secondes cloisons peuvent comprendre un quatrième angle compris entre -45° et 0° et formé entre la troisième position du troisième angle et la seconde extrémité à une quatrième position de ladite hauteur des secondes cloisons comprise entre 10% et 100% de ladite hauteur mesurée depuis la première extrémité.

Ce quatrième angle est destiné à orienter une quatrième portion de seconde cloison vers l'aval lorsque la grille est montée dans un dispositif d'inversion de poussée disposé dans une turbomachine traversée par un flux d'air.

Ce quatrième angle formé à une quatrième position de la hauteur de la seconde cloison plus éloignée du flux gazeux circulant à l'intérieur de la nacelle que le troisième angle, permet d'optimiser la réflexion des ondes acoustiques au fond de la cavité résonante lorsque l'inverseur de poussée n'est pas activé et que la grille est rentrée dans la nacelle, dans son logement entre une paroi perforée en contact avec le flux gazeux interne et une paroi réfléchissante radialement externe par rapport à la paroi perforée.

Dans un sixième aspect de la grille, les secondes cloisons peuvent comprendre des portions de hauteur s'étendant entre chaque extrémité et la position adjacente de la hauteur des secondes cloisons, et entre deux positions successives de la hauteur des secondes cloisons, deux portions adjacentes étant raccordées par des transitions présentant des rayons de courbure supérieurs à 1 mm.

Le raccordement des différentes portions des secondes cloisons avec des rayons de courbure supérieurs à 1 mm permet d'obtenir des transitions progressives favorisant un guidage efficace des ondes acoustiques.

Dans un septième aspect de la grille, la hauteur des secondes cloisons peut être comprise entre 10 mm et 300 mm et l'épaisseur des secondes cloisons peut être comprise entre 0,5 mm et 5 mm pour être suffisamment épaisses pour tenir les cas de charges auxquels elles sont soumises, mais aussi les plus fines possible pour minimiser la masse et les pertes de charge dans la grille. L'épaisseur des secondes cloisons est mesurée en un point donné de la seconde cloison, perpendiculairement à la tangente à la surface en ce point de la seconde cloison.

Dans un autre objet de l'invention, il est proposé un dispositif d'inversion de poussée à grille pour une turbomachine d'un aéronef, caractérisé en ce qu'il comprend au moins une grille telle que définie ci-dessus.

Dans encore un autre objet de l'invention, il est proposé une turbomachine destinée à être montée sur un aéronef, la turbomachine comprenant une nacelle à symétrie de révolution définissant une direction axiale et une direction radiale, la nacelle comportant une épaisseur selon la direction radiale et un logement s'étendant selon la direction axiale dans son épaisseur pour recevoir une grille d'un dispositif d'inversion de poussée à grille.

Selon une caractéristique générale de cet objet de l'invention, la turbomachine peut comprendre un dispositif d'inversion de poussée à grille tel que défini ci-dessus, la grille étant disposée, lorsque l'inversion de poussée n'est pas requise, dans le logement correspondant de la nacelle de la turbomachine avec les première cloisons s'étendant selon la direction axiale et la direction radiale et les secondes cloisons s'étendant selon la direction radiale et selon une direction orthogonale à la direction axiale et à la direction radiale, la première direction correspondant à la direction axiale.

Dans un mode de réalisation de la turbomachine, la nacelle peut comprendre une paroi perforée formant une paroi radialement interne du logement et une paroi réfléchissante formant une paroi radialement externe du logement.

Dans un autre objet de l'invention, il est proposé un aéronef comprenant au moins une turbomachine telle que définie ci-dessus.

### Brève description des dessins

L'invention sera mieux comprise à la lecture faite ci-après, à titre indicatif mais non limitatif, en référence aux dessins annexés sur lesquels :
[Fig. 1A-1B] Les figures 1A et 1B, déjà décrites, présentent des vues schématiques en section dans un plan longitudinal d'une turbomachine selon un premier mode de réalisation connu de l'état de la technique respectivement dans une position d'inversion de poussée inactive et dans une position d'inversion de poussée activée.
[Fig. 2A-2B] Les figures 2A et 2B, déjà décrites, présentent des vues schématiques en section dans un plan longitudinal d'une turbomachine selon un second mode de réalisation connu de l'état de la technique respectivement dans une position d'inversion de poussée inactive et dans une position d'inversion de poussée activée.
[Fig. 3] La figure 3 présente une vue schématique en section selon un plan comprenant la direction axiale et orthogonale à la direction radiale d'une grille d'un dispositif d'inversion de poussée pour une turbomachine selon un mode de réalisation de l'invention.
[Fig. 4] La figure 4 présente une vue schématique en section selon un plan comprenant la direction axiale et la direction radiale d'une grille d'un dispositif d'inversion de poussée pour une turbomachine selon un mode de réalisation de l'invention.

### Description des modes de réalisation

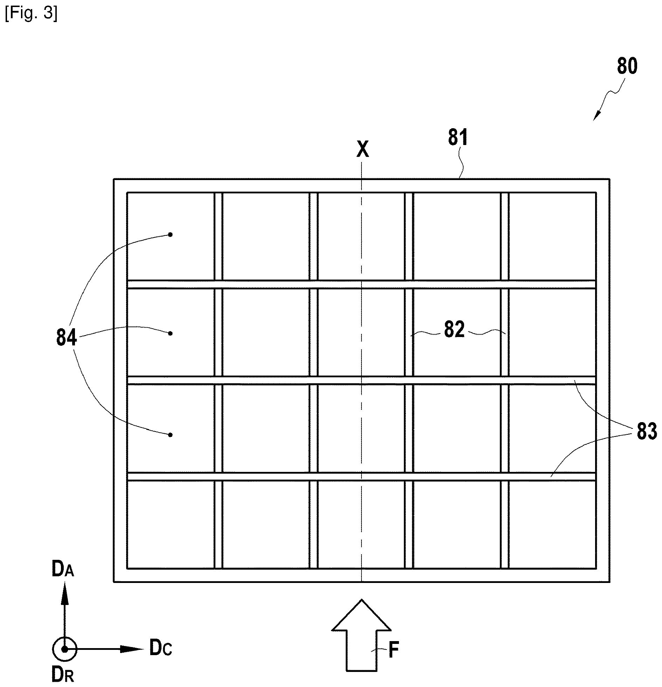

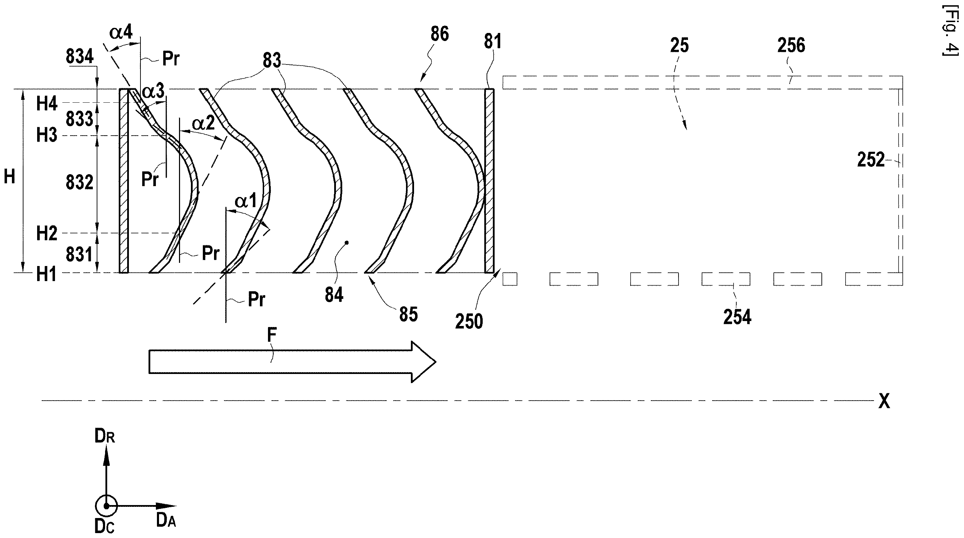

Sur les figures 3 et 4 est représentée respectivement une première vue schématique en section et une seconde vue schématique en section d'une grille d'un dispositif d'inversion de poussée pour une turbomachine d'un aéronef selon un mode de réalisation de l'invention.

La turbomachine comprend un dispositif d'inversion de poussée pouvant fonctionner selon le fonctionnement décrit sur les figures 1A et 1B ou selon le fonctionnement décrit sur les figures 2A et 2B.

Le dispositif d'inversion de poussée comprend une pluralité de grilles 80 assemblées pour former une couronne grillagée. Chaque grille 80 comprend un cadre 81 à l'intérieur duquel s'étendent des premières cloisons 82 dans une première direction et des secondes cloisons 83 dans une deuxième direction orthogonale à la première direction. Le cadre 81 et les premières et secondes cloisons 82 et 83 possèdent une hauteur *H* dans une troisième direction orthogonales aux première et seconde directions comprise entre 10 mm et 300 mm.

L'épaisseur des secondes cloisons 83 est comprise entre 0,5 mm et 5 mm pour être suffisamment épaisses pour tenir les cas de charges auxquels elles sont soumises, mais aussi les plus fines possible pour minimiser la masse et les pertes de charge dans la grille.

La figure 3 est une vue schématique en section dans un premier plan de coupe comprenant lesdites première et deuxième directions.

La figure 4 est une vue schématique en section dans un second plan de coupe comprenant lesdites première et troisième directions.

Lorsque le dispositif d'inversion de poussée est monté sur une turbomachine telles que celles illustrées sur les figures 1a, 1b , 2a, 2b, la première direction correspond à la direction axiale D_{A} de la turbomachine 1, la deuxième direction correspond à la direction circonférentielle D_{C} de la turbomachine 1, et la troisième direction correspond à la direction radiale D_{R} de la turbomachine 1.

Les secondes cloisons 83 sont des cloisons azimutales destinées à orienter le flux gazeux F vers l'extérieur de la nacelle 2 et en amont de la turbomachine pour l'inversion de poussée lorsque le dispositif d'inversion de poussée est activée. Les premières cloisons 82 sont des cloisons axiales destinées à définir, avec les secondes cloisons 83, des cavités résonnantes 84 pour l'absorption des ondes acoustiques générées par la turbomachine, lorsque le dispositif d'inversion de poussée est inactif.

La distance dans la deuxième direction, c'est-à-dire dans la direction circonférentielle D_{C}, séparant deux premières cloisons 82 adjacentes l'une de l'autre est égale à la distance dans la première direction, c'est-à-dire dans la direction axiale D_{A}, séparant deux secondes cloisons 83, pour ainsi favoriser la propagation acoustique en ondes planes à l'intérieur des cavités.

Comme cela est illustré sur la figure 4, les secondes cloisons 83 ne sont pas planes selon la troisième direction, c'est-à-dire dans la direction radiale D_{R}. Les secondes cloisons 83 présentent une forme complexe présentant, dans le mode de réalisation illustré sur la figure 4, quatre angles non nuls avec des plans de référence *Pr* parallèles aux directions radiale D_{R} et circonférentielle D_{C}, autrement dit avec des plans orthogonaux à la direction axiale D_{A}. Chaque angle est mesuré entre un plan de référence *Pr* et la tangente à la seconde cloison 83 prise à l'intersection entre le plan de référence *Pr* correspondant et la seconde cloison 82 à la position de la hauteur de la seconde cloison correspondante. L'angle est mesuré entre un angle de -180° à +180° de part et d'autre du plan de référence *Pr* correspondant. Un angle nul correspondant à une tangente s'étendant dans le plan de référence *Pr.* Un angle négatif correspond à une tangente orientée vers l'amont de la turbomachine 1 dans laquelle est montée le dispositif d'inversion de poussée, un angle positif correspond à une tangente orientée vers l'aval.

Sur la figure 4 est représenté l'axe de rotation X de la turbomachine 1. Les secondes cloisons 83 s'étendent entre une première extrémité 85 en regard de l'axe de rotation X et une seconde extrémité 86 opposée à la première extrémité 85 et destinée à être orientée vers l'extérieur de la nacelle 2.

La figure 4 illustre la grille dans une position active de l'inverseur de poussée, c'est-à-dire dans une position où la grille 80 est sortie d'un logement 25 prévu dans l'épaisseur de la nacelle 2 pour recevoir la grille 80 lorsque l'inverseur de poussée est inactif. Le logement 25 comprend une ouverture 250 permettant l'insertion de la grille 80 dans le logement 25 selon la direction axiale D_{A}, une paroi de fond 252 s'étendant dans la direction radiale D_{R} à l'opposé de l'ouverture 250, une paroi perforée 254 et une paroi réfléchissante 256 parallèle l'une à l'autre et s'étendant dans la direction axiale D_{A} et dans la direction circonférentielle D_{C}, la paroi perforée 254 étant radialement à l'intérieur de la paroi réfléchissante 256. Les parois perforée et réfléchissante 254 et 256 permettent ainsi, lorsque la grille est insérée dans le logement de former des cavités résonnantes de type résonateur de Helmholtz doté d'un volume et d'un col formé par chacune des ouvertures de la paroi perforée 254.

La hauteur *H* de la nacelle est mesurée depuis la première extrémité 85 vers la seconde extrémité 86. On distinguera ainsi par la suite différent niveau de hauteur *H* en pourcentage de la hauteur des secondes cloisons 83. Plus la position est donnée avec un pourcentage de la hauteur est faible, plus la position est proche de la première extrémité 85. Plus le pourcentage est élevé, plus la position est proche de la seconde extrémité.

Comme cela est illustré sur la figure 4, chaque seconde cloison comprend un premier angle α1 compris entre 0° et 40° orienté vers l'aval, par exemple de 40° sur la figure 4, et formé à une première position H1 de la hauteur *H* comprise entre 0% et 20%, par exemple 0% sur la figure 4, c'est-à-dire au niveau de la première extrémité 85. Ce premier angle α1 formé à l'entrée de la cavité résonante favorise la propagation acoustique en ondes planes à l'entrée dans les cavités résonantes 84, en évitant les phénomènes de réflexions d'ondes sur les secondes cloisons 83 d'inverseur.

Chaque seconde cloison 83 comprend un deuxième angle α2 compris entre 20° et 60° orienté également vers l'aval, par exemple 20° sur la figure 4, et formé entre la première position H1 et la seconde extrémité 86 à une deuxième position H2 de la hauteur *H* comprise entre 5% et 60%, par exemple 35% sur la figure 4. Ce deuxième angle α2 formé à une deuxième position H2 permet de bien capter l'écoulement aérodynamique lorsque l'inverseur de poussée est activé.

Chaque seconde cloison 83 comprend un troisième angle α3 compris entre -20° et - 70° orienté vers l'amont, par exemple -50° sur la figure 4, et formé entre la deuxième position H2 et la deuxième extrémité 86 à une troisième position H3 de la hauteur *H* comprise entre 45% et 95%, par exemple 60% sur la figure 4. Ce troisième angle α3 formé à une troisième position H3 réoriente l'écoulement aérodynamique F vers l'amont de la turbomachine 1 à l'extérieur de la nacelle 2, lorsque l'inverseur de poussée est en position ouverte.

Chaque cloison 83 comprend un quatrième angle α4 compris entre -45° et 0° orienté vers l'amont, par exemple -20° sur la figure 4, et formé entre la troisième position H3 du troisième angle α3 et la seconde extrémité 86 à une quatrième position H4 de la hauteur *H* comprise entre 10% et 100%, par exemple 90% sur la figure 4. Ce quatrième angle α4 formé à une quatrième position H4 de la hauteur *H* optimise la réflexion des ondes acoustiques au fond de la cavité résonante 84 lorsque l'inverseur de poussée n'est pas activé et que la grille 80 est rentrée dans la nacelle 2, dans son logement 25 entre la paroi perforée 254 en contact avec le flux gazeux interne F et la paroi réfléchissante 256 radialement externe par rapport à la paroi perforée 254.

Chaque seconde cloison 83 comprend ainsi des portions de hauteur 831 à 834 s'étendant entre une extrémité 85 ou 86 et une position de hauteur H1 à H4 non confondue avec une extrémité 85 ou 86, et entre deux position de hauteur H1 à H4 adjacentes. La première portion 831 s'étend entre la première extrémité 85 et la seconde position H2. La deuxième portion 832 s'étend entre la deuxième position H2 et la troisième position H3. La troisième portion 833 s'étend entre la troisième position H3 et la quatrième position H4. La quatrième portion 834 s'étend entre la quatrième hauteur H4 et la seconde extrémité 86. Deux portions adjacentes sont raccordées par des transitions présentant des rayons de courbure supérieurs à 1 mm pour obtenir des transitions progressives favorisant un guidage efficace des ondes acoustiques.

L'invention fournit ainsi une grille d'un inverseur de poussée à grille qui permet, lorsque la grille est montée dans un inverseur de poussée d'une turbomachine, à la fois de réorienter un flux d'air vers l'amont de la turbomachine à l'extérieur de la nacelle, de minimiser les pertes de charge à travers la grille et de maximiser l'efficacité d'absorption acoustique.

## Revendications

1. Turbomachine (1) destinée à être montée sur un aéronef, la turbomachine (1) comprenant un dispositif d'inversion de poussée à grille et une nacelle (2) à symétrie de révolution définissant une direction axiale (D_{A}) et une direction radiale (D_{R}), la nacelle (2) comportant une épaisseur selon la direction radiale (D_{R}) et un logement (25) s'étendant selon la direction axiale (D_{A}) dans son épaisseur pour recevoir une grille (80) d'un dispositif d'inversion de poussée à grille,
le dispositif d'inversion de poussée comprenant une grille (80) comportant des premières cloisons (82) s'étendant dans une première direction (D_{A}), des secondes cloisons (83) s'étendant dans une deuxième direction (D_{C}) orthogonale à la première direction (D_{A}), les secondes cloisons (83) s'étendant entre une première et une seconde extrémités (85 et 86) dans une troisième direction (D_{R}) sécante à un plan comprenant les première et deuxième directions (D_{A} et D_{C}), et au moins une partie de chaque seconde cloison (83) s'étendant entre deux premières cloisons (82),
**caractérisée en ce que** chaque seconde cloison (83) forme, avec des plans de référence (Pr) parallèles à la deuxième direction (D_{C}) et à la troisième direction (D_{R}), une pluralité d'angles (α1 à α4) différents à des positions (H1 à H4) distinctes de la hauteur (H) des secondes cloisons (83) séparant la première extrémité (85) de la seconde extrémité (86) des secondes cloisons (83), chaque angle (α1 à α4) étant formé entre un plan de référence (Pr) et la tangente à la seconde cloison (83) prise à l'intersection entre ledit plan de référence (Pr) correspondant et la seconde cloison (83) à la position (H1 à H4) de la hauteur (H) de la seconde cloison (83) correspondante en que la nacelle (2) comprend une paroi perforée (254) formant une paroi radialement interne du logement (25) et une paroi réfléchissante (256) formant une paroi radialement externe du logement (25), la grille (80) étant disposée, lorsque l'inversion de poussée n'est pas requise, dans le logement (25) correspondant de la nacelle (2) de la turbomachine (1) avec les première cloisons (82) s'étendant selon la direction axiale (D_{A}) et la direction radiale (D_{R}) et les secondes cloisons (83) s'étendant selon la direction radiale (D_{R}) et selon une direction orthogonale à la direction axiale (D_{A}) et à la direction radiale (D_{R}), la première direction correspondant à la direction axiale(D_{A}).

2. Turbomachine (1) selon la revendication 1, dans laquelle la distance entre deux premières cloisons (82) selon la deuxième direction (DC) correspond, au minimum, à la moitié de la distance entre deux secondes cloisons (83) selon la première direction (DA), et au maximum, au double de la distance entre deux secondes cloisons (83) selon la première direction (DA).

3. Turbomachine (1) selon l'une des revendications 1 ou 2, dans laquelle les secondes cloisons (83) comprennent un premier angle (α1) compris entre 0° et 40° et formé à une première position (H1) de ladite hauteur (H) des secondes cloisons (83) comprise entre 0% et 20% de ladite hauteur (H) mesurée depuis la première extrémité (85) vers la seconde extrémité (86), le premier angle (α1) étant destiné à orienter une première portion (831) de seconde cloison (83) vers l'aval lorsque la grille (80) est montée dans un dispositif d'inversion de poussée disposé dans une turbomachine (1) traversée par un flux d'air (F) depuis l'amont de l'a turbomachine (1) vers l'aval de la turbomachine (1).

4. Turbomachine (1) selon la revendication 3, dans laquelle les secondes cloisons (83) comprennent un deuxième angle (α2) compris entre 20° et 60° et formé entre la première position (H1) et la seconde extrémité (86) à une deuxième position (H2) de ladite hauteur (H) des secondes cloisons (83) comprise entre 5% et 60% de ladite hauteur (H) mesurée depuis la première extrémité (85), le deuxième angle (α2) étant destiné à orienter une deuxième portion (832) de seconde cloison (83) vers l'aval lorsque la grille (80) est montée dans un dispositif d'inversion de poussée disposé dans une turbomachine (1) traversée par un flux d'air (F) depuis l'amont de l'a turbomachine (1) vers l'aval de la turbomachine (1).

5. Turbomachine (1) selon la revendication 4, dans laquelle les secondes cloisons (83) comprennent un troisième angle (α3) compris entre -20° et -70° et formé entre la deuxième position (H2) et la deuxième extrémité (86) à une troisième position (H3) de ladite hauteur (H) des secondes cloisons (83) comprise entre 45% et 95% de ladite hauteur (H) mesurée depuis la première extrémité (85), le troisième angle (α3) étant destiné à orienter une troisième portion (833) de seconde cloison (83) vers l'amont lorsque la grille (80) est montée dans un dispositif d'inversion de poussée disposé dans une turbomachine (1) traversée par un flux d'air (F) depuis l'amont de l'a turbomachine (1) vers l'aval de la turbomachine (1).

6. Turbomachine (1) selon l'une des revendications 1 à 5, dans laquelle les secondes cloisons (83) comprennent un quatrième angle (α4) compris entre -45° et 0° et formé entre la troisième position (H3) et la seconde extrémité (86) à une quatrième position (H4) de ladite hauteur (H) des secondes cloisons (83) comprise entre 10% et 100% de ladite hauteur (H) mesurée depuis la première extrémité (85), le quatrième angle (α4) étant destiné à orienter une quatrième portion (834) de seconde cloison (83) vers l'amont lorsque la grille (80) est montée dans un dispositif d'inversion de poussée disposé dans une turbomachine (1) traversée par un flux d'air (F) depuis l'amont de l'a turbomachine (1) vers l'aval de la turbomachine (1).

7. Turbomachine (1) selon l'une des revendications 1 à 6, dans laquelle les secondes cloisons (83) comprennent des portions de hauteur (831 à 834) s'étendant entre chaque extrémité (85 et 86) et la position adjacente (H2, H4) de la hauteur (H) des secondes cloisons (83), et entre deux positions successives (H1 et H2, H2 et H3, H3 et H4) de la hauteur (H) des secondes cloisons (83), deux portions adjacentes (831 et 832, 832 et 833, 833 et 834) étant raccordées par des transitions présentant des rayons de courbure supérieurs à 1 mm.

8. Turbomachine (1) selon l'une des revendications 1 à 7, dans laquelle la hauteur (H) des secondes cloisons (83) est comprise entre 10 mm et 300 mm et l'épaisseur des secondes cloisons (83) est comprise entre 0,5 mm et 5 mm.

9. Aéronef comprenant au moins une turbomachine (1) selon l'une des revendications 1 à 8.

## Patentansprüche

1. Turbomaschine (1), die zur Anbringung an einem Luftfahrzeug bestimmt ist, wobei die Turbomaschine (1) eine Schubumkehrvorrichtung mit Gitter und eine Gondel (2) mit Drehsymmetrie umfasst, die eine axiale Richtung (D_{A}) und eine radiale Richtung (D_{R}) definiert, wobei die Gondel (2) eine Dicke in der radialen Richtung (D_{R}) und eine Aufnahme (25) aufweist, die sich in der axialen Richtung (D_{A}) in ihrer Dicke erstreckt, um ein Gitter (80) einer Schubumkehrvorrichtung mit Gitter aufzunehmen,
wobei die Schubumkehrvorrichtung ein Gitter (80) umfasst, das erste Unterteilungen (82) aufweist, die sich in einer ersten Richtung (D_{A}) erstrecken, zweite Unterteilungen (83), die sich in einer zweiten Richtung (D_{c}) orthogonal zur ersten Richtung (D_{A}) erstrecken, wobei sich die zweiten Unterteilungen (83) zwischen einem ersten und einem zweiten Ende (85 und 86) in einer dritten Richtung (D_{R}) erstrecken, die zu einer Ebene schneidend ist, die die erste und zweite Richtung (D_{A} und D_{c}) umfasst, und sich mindestens ein Teil jeder zweiten Unterteilung (83) zwischen zwei ersten Unterteilungen (82) erstreckt,
**dadurch gekennzeichnet, dass** jede zweite Unterteilung (83) mit Referenzebenen (Pr), die zu der zweiten Richtung (D_{c}) und zu der dritten Richtung (D_{R}) parallel sind, eine Vielzahl unterschiedlicher Winkel (α1 bis α4) an verschiedenen Positionen (H1 bis H4) der Höhe (H) der zweiten Unterteilungen (83) bilden, die das erste Ende (85) vom zweiten Ende (86) der zweiten Unterteilungen (83) trennen, wobei jeder Winkel (α1 bis a4) zwischen einer Referenzebene (Pr) und der Tangente der zweiten Unterteilung (83), herangezogen am Schnittpunkt zwischen der entsprechenden Referenzebene (Pr) und der zweiten Unterteilung (83) an der Position (H1 bis H4) der Höhe (H) der entsprechenden zweiten Unterteilung (83), gebildet wird,
dass die Gondel (2) eine durchbrochene Wand (254) umfasst, die eine radial innere Wand der Aufnahme (25) bildet, und eine reflektierende Wand (256), die eine radial äußere Wand der Aufnahme (25) bildet, wobei das Gitter (80), wenn die Schubumkehr nicht gefordert ist, in der entsprechenden Aufnahme (25) der Gondel (2) der Turbomaschine (1) mit den ersten Unterteilungen (82) angeordnet ist, die sich in der axialen Richtung (D_{A}) und der radialen Richtung (D_{R}) erstrecken, und den zweiten Unterteilungen (83), die sich in der radialen Richtung (D_{R}) und in einer Richtung orthogonal zur axialen Richtung (D_{A}) und zur radialen Richtung (D_{R}) erstrecken, wobei die erste Richtung der axialen Richtung (D_{A}) entspricht.

2. Turbomaschine (1) nach Anspruch 1, wobei der Abstand zwischen zwei ersten Unterteilungen (82) in der zweiten Richtung (D_{C}) mindestens der Hälfte des Abstands zwischen zwei zweiten Unterteilungen (83) in der ersten Richtung (D_{A}) und maximal dem Doppelten des Abstands zwischen zwei zweiten Unterteilungen (83) in der ersten Richtung (D_{A}) entspricht.

3. Turbomaschine (1) nach einem der Ansprüche 1 oder 2, wobei die zweiten Unterteilungen (83) einen ersten Winkel (α1) umfassen, der zwischen 0° und 40° liegt und an einer ersten Position (H1) der Höhe (H) der zweiten Unterteilungen (83) gebildet ist, die zwischen 0% und 20% der Höhe (H) liegt, gemessen ab dem ersten Ende (85) zum zweiten Ende (86), wobei der erste Winkel (α1) bestimmt ist, einen ersten Abschnitt (831) einer zweiten Unterteilung (83) nach stromabwärts auszurichten, wenn das Gitter (80) in einer Schubumkehrvorrichtung angebracht ist, die in einer Turbomaschine (1) angeordnet ist, die von einem Luftstrom (F) von stromaufwärts zur Turbomaschine (1) nach stromabwärts zur Turbomaschine (1) durchquert wird.

4. Turbomaschine (1) nach Anspruch 3, wobei die zweiten Unterteilungen (83) einen zweiten Winkel (α2) umfassen, der zwischen 20° und 60° liegt und zwischen der ersten Position (H1) und dem zweiten Ende (86) an einer zweiten Position (H2) der Höhe (H) der zweiten Unterteilungen (83) gebildet ist, die zwischen 5% und 60% der Höhe (H) liegt, gemessen ab dem ersten Ende (85), wobei der zweite Winkel (α2) bestimmt ist, einen zweiten Abschnitt (832) einer zweiten Unterteilung (83) nach stromabwärts auszurichten, wenn das Gitter (80) in einer Schubumkehrvorrichtung angebracht ist, die in einer Turbomaschine (1) angeordnet ist, die von einem Luftstrom (F) von stromaufwärts zur Turbomaschine (1) nach stromabwärts zur Turbomaschine (1) durchquert wird.

5. Turbomaschine (1) nach Anspruch 4, wobei die zweiten Unterteilungen (83) einen dritten Winkel (a3) umfassen, der zwischen - 20° und -70° liegt und zwischen der zweiten Position (H2) und dem zweiten Ende (86) an einer dritten Position (H3) der Höhe (H) der zweiten Unterteilungen (83) gebildet ist, die zwischen 45% und 95% der Höhe (H) liegt, gemessen ab dem ersten Ende (85), wobei der dritte Winkel (α3) bestimmt ist, einen dritten Abschnitt (833) einer zweiten Unterteilung (83) nach stromaufwärts auszurichten, wenn das Gitter (80) in einer Schubumkehrvorrichtung angebracht ist, die in einer Turbomaschine (1) angeordnet ist, die von einem Luftstrom (F) von stromaufwärts zur Turbomaschine (1) nach stromabwärts zur Turbomaschine (1) durchquert wird.

6. Turbomaschine (1) nach einem der Ansprüche 1 bis 5, wobei die zweiten Unterteilungen (83) einen vierten Winkel (α4) umfassen, der zwischen -45° und 0° liegt und zwischen der dritten Position (H3) und dem zweiten Ende (86) an einer vierten Position (H4) der Höhe (H) der zweiten Unterteilungen (83) gebildet ist, die zwischen 10% und 100% der Höhe (H) liegt, gemessen ab dem ersten Ende (85), wobei der vierte Winkel (α4) bestimmt ist, einen vierten Abschnitt (834) einer zweiten Unterteilung (83) nach stromaufwärts auszurichten, wenn das Gitter (80) in einer Schubumkehrvorrichtung angebracht ist, die in einer Turbomaschine (1) angeordnet ist, die von einem Luftstrom (F) von stromaufwärts zur Turbomaschine (1) nach stromabwärts zur Turbomaschine (1) durchquert wird.

7. Turbomaschine (1) nach einem der Ansprüche 1 bis 6, wobei die zweiten Unterteilungen (83) Höhenabschnitte (831 bis 834) aufweisen, die sich zwischen jedem Ende (85 und 86) und der benachbarten Position (H2, H4) der Höhe (H) der zweiten Unterteilungen (83) und zwischen zwei aufeinanderfolgenden Positionen (H1 und H2, H2 und H3, H3 und H4) der Höhe (H) der zweiten Unterteilungen (83) erstrecken, wobei zwei benachbarte Abschnitte (831 und 832, 832 und 833, 833 und 834) durch Übergänge verbunden sind, die Krümmungsradien über 1 mm aufweisen.

8. Turbomaschine (1) nach einem der Ansprüche 1 bis 7, wobei die Höhe (H) der zweiten Unterteilungen (83) zwischen 10 mm und 300 mm liegt und die Dicke der zweiten Unterteilungen (83) zwischen 0,5 mm und 5 mm liegt.

9. Luftfahrzeug, das mindestens eine Turbomaschine (1) nach einem der Ansprüche 1 bis 8 aufweist.

## Claims

1. A turbomachine (1) intended to be mounted on an aircraft, the turbomachine (1) comprising a cascade thrust reverser device and a nacelle (2) with symmetry of revolution defining an axial direction (D_{A}) and a radial direction (D_{R}), the nacelle (2) including a thickness along the radial direction (D_{R}) and a housing (25) extending along the axial direction (D_{A}) in its thickness to receive a cascade (80) of a cascade thrust reverser device,
the thrust reverser device comprising a cascade (80) including first partitions (82) extending in a first direction (D_{A}), second partitions (83) extending in a second direction (D_{C}) orthogonal to the first direction (D_{A}), the second partitions (83) extending between a first and a second end (85 and 86) in a third direction (D_{R}) secant to a plane comprising the first and second directions (D_{A} and D_{C}), and at least part of each second partition (83) extending between two first partitions (82),
**characterized in that** each second partition (83) forms, with reference planes (Pr) parallel to the second direction (D_{C}) and to the third direction (D_{R}), a plurality of different angles (α1 to α4) at positions (H1 to H4) distinct from the height (H) of the second partitions (83) separating the first end (85) from the second end (86) of the second partitions (83), each angle (α1 to α4) being formed between a reference plane (Pr) and the tangent to the second partition (83) taken at the intersection between said corresponding reference plane (Pr) and the second partition (83), at the position (H1 to H4) of the height (H) of the corresponding second partition (83),
**in that** the nacelle (2) comprises a perforated wall (254) forming a radially internal wall of the housing (25) and a reflecting wall (256) forming a radially external wall of the housing (25), the cascade (80) being disposed, when the thrust reversal is not required, in the corresponding housing (25) of the nacelle (2) of the turbomachine (1) with the first partitions (82) extending along the axial direction (D_{A}) and the radial direction (D_{R}) and the second partitions (83) extending along the radial direction (D_{R}) and along a direction orthogonal to the axial direction (D_{A}) and to the radial direction (D_{R}), the first direction corresponding to the axial direction (D_{A}).

2. The turbomachine (1) according to claim 1, wherein the distance between two first partitions (82) along the second direction (DC) corresponds, at least, to half the distance between two second partitions (83) along the first direction (DA), and at most, twice the distance between two second partitions (83) along the first direction (DA).

3. The turbomachine (1) according to any of claims 1 or 2, wherein the second partitions (83) comprise a first angle (α1) comprised between 0° and 40° and formed at a first position (H1) of said height (H) of the second partitions (83) comprised between 0% and 20% of said height (H) measured from the first end (85) to the second end (86), the first angle (α1) being intended to orient a first portion (831) of the second partition (83) downstream when the cascade (80) is mounted in a thrust reverser device disposed in a turbomachine (1) through which an air stream (F) passes from the upstream of the turbomachine (1) towards the downstream of the turbomachine (1).

4. The turbomachine (1) according to claim 3, wherein the second partitions (83) comprise a second angle (α2) comprised between 20° and 60° and formed between the first position (H1) and the second end (86) at a second position (H2) of said height (H) of the second partitions (83) comprised between 5% and 60% of said height (H) measured from the first end (85), the second angle (α2) being intended to orient a second portion (832) of the second partition (83) downstream when the cascade (80) is mounted in a thrust reverser device disposed in a turbomachine (1) through which an air stream (F) passes from the upstream of the turbomachine (1) towards the downstream of the turbomachine (1).

5. The turbomachine (1) according to claim 4, wherein the second partitions (83) comprise a third angle (α3) comprised between -20° and -70° and formed between the second position (H2) and the second end (86) at a third position (H3) of said height (H) of the second partitions (83) comprised between 45% and 95% of said height (H) measured from the first end (85), the third angle (α3) being intended to orient a third portion (833) of the second partition (83) upstream when the cascade (80) is mounted in a thrust reverser device disposed in a turbomachine (1) through which an air stream (F) passes from the upstream of the turbomachine (1) towards the downstream of the turbomachine (1).

6. The turbomachine (1) according to any of claims 1 to 5, wherein the second partitions (83) comprise a fourth angle (α4) comprised between -45° and 0° and formed between the third position (H3) and the second end (86) at a fourth position (H4) of said height (H) of the second partitions (83) comprised between 10% and 100% of said height (H) measured from the first end (85), the fourth angle (α4) being intended to orient a fourth portion (834) of the second partition (83) upstream when the cascade (80) is mounted in a thrust reverser device disposed in a turbomachine (1) through which an air stream (F) passes from the upstream of the turbomachine (1) towards the downstream of the turbomachine (1).

7. The turbomachine (1) according to any of claims 1 to 6, wherein the second partitions (83) comprise height portions (831 to 834) extending between each end (85 and 86) and the adjacent position (H2, H4) of the height (H) of the second partitions (83), and between two successive positions (H1 and H2, H2 and H3, H3 and H4) of the height (H) of the second partitions (83), two adjacent portions (831 and 832, 832 and 833, 833 and 834) being connected by transitions with radii of curvature greater than 1 mm.

8. The turbomachine (1) according to any of claims 1 to 7, wherein the height (H) of the second partitions (83) is comprised between 10 mm and 300 mm and the thickness of the second partitions (83) is comprised between 0.5 mm and 5 mm.

9. An aircraft comprising at least one turbomachine (1) according to any of claims 1 to 8.
